# EUROPEAN PATENT SPECIFICATION

(11) **EP 1 073 303 B1**
(45) Date of publication and mention of the grant of the patent: **09.11.2005**
(21) Application number: 99112381.1
(22) Date of filing: 29.06.1999
(51) Int. Cl.: H04Q 7/38

(54) **Mobile telephone and method to operate a mobile phone**
Mobiltelefon und Verfahren zu dessen Betrieb
Téléphone mobile et sa méthode de mise en oeuvre

(43) Date of publication of application: 31.01.2001
(73) Proprietor: SIEMENS AKTIENGESELLSCHAFT, 80333 München (DE)
(72) Inventor: Jepsen, Bent, 9700 Bronderslev (DK)

(56) References cited:
- WO-A-95/31879
- DE-A- 19 746 894
- DE-C- 19 600 197

## Description

In DE-A-196 00 197, cell reselection can be enabled even though more than one time slots per time frame is used for receiving or transmitting data. In the case that receiving or transmitting a larger amount of data would prohibit the monitoring of a neighbour channel, thus making cell reselection impossible, the receiving or transmission is interrupted for a while between each data segment, during which the neighbour cells can be monitored.

It is already known how a mobile telephone operates in the GSM-TDMA time frame structure thereby maintaining a telephone connection to a GSM base station. Further, it is known how to access a UMTS base station.

The invention relates to a method of claim 1 for preparing a mobile telephone having an active connection on a GSM TDMA channel to make a handover to a UMTS-FDD channel, and to a mobile station of claim 5. Dependent claims 2 to 4 describe various preferred embodiments of the invention.

The mobile telephone and method to operate a mobile telephone according to the independent patent claims have the advantage that an ongoing connection to a GSM base station can be maintained and at the same time the information necessary for a handover to a UMTS base station can be obtained from a UMTS base station. It is not necessary to interrupt the connection to the GSM base station in order to establish a connection to the UMTS base station. This does not require a second receiver in the mobile telephone.

Further advantages result from the features of the dependent patent claims. The monitoring period can be used to read the information of a primary synchronization channel, a secondary synchronization channel or a primary common control physical channel of the UMTS base station. Short monitoring periods can be used to obtain the information of the secondary synchronization channel of the UMTS base station. The monitoring period can be used together with a GSM monitoring period in the normal GSM structure.

The invention is shown in the drawings 1 to 10 and in described in greater detail in the following description.
Figure 1 shows a GSM-TDMA time frame;
Figure 2 depicts a UMTS-FDD time frame;
Figure 3 shows a detail of a UMTS time frame;
Figure 4 illustrates the output of a matched filter;
Figures 5 and 6 show a plurality of GSM-TDMA time frames and UMTS time frames;
Figures 7, 8, and 9 illustrate GSM-TDMA time frames with monitor periods; and
Figure 10 shows a mobile telephone, a GSM base station, and a UMTS base station.

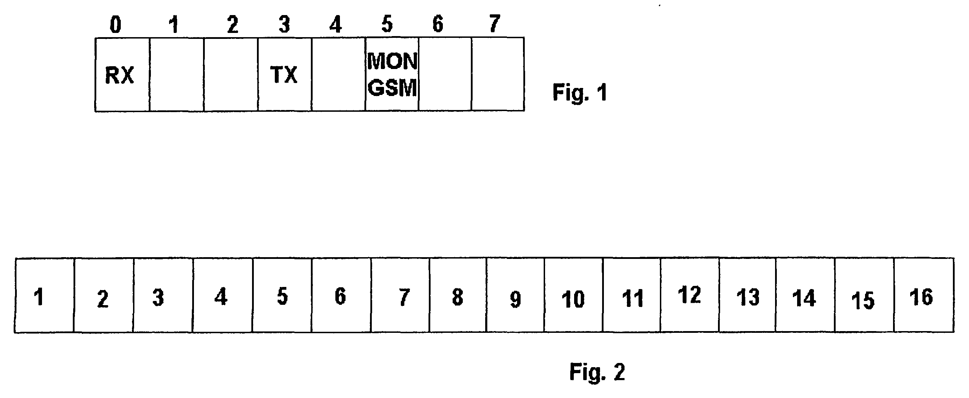

Figure 1 shows the time frame structure of a GSM Time Division Multiple Access TDMA time frame. Such a GSM TDMA time frame consists of 8 time slots of equal length. The total length of the time frame is 60/13 ms (4,615 ms) so that every time slot has a length of 60/104 ms (0,576 ms). One of the time slots is used for transmitting information (tx). The transmitting time slot tx is always 2 time slots behind the receiving time slot rx. This is shown in Figure 1, where the time slot numbering is given relative to rx time slot.

Figure 2 shows the structure of a UMTS Frequency Division Duplex FDD time frame. The UMTS-FDD time frame has a length of 10 ms and is divided into 16 time slots of equal lengths each having a lengths of 10/16 ms (0,625 ms).

The invention is related to a dual band mobile telephone that is capable to operate in the GSM system and in the UMTS system. According to the invention, such a mobile telephone does not need to have two receivers in order to allow a seamless handover from the GSM system to the UMTS system. A seamless handover is an uninterrupted handover of a connection from a GSM base station to a UMTS base station. When the mobile telephone is operating in the GSM mode it is necessary to monitor UMTS base stations to have the possibility to switch from a GSM base station to a UMTS base station. Such a change from one base station to another base station is called handover. Within the GSM system, there are also handovers from one base station to the other base station. In order to perform such a handover, in the GSM TDMA time frame structure there normally is a GSM monitor time slot which is used by the GSM mobile telephone to monitor other GSM base stations within the reach of the mobile telephone. The invention relates now to the handover from a GSM system to a UMTS-FDD system. Therefore, it has to be possible for a mobile telephone to monitor base stations that belong to the UMTS-FDD system when the mobile telephone has a connection wherein the GSM time frame structure is used. Such a monitoring is no problem if the mobile telephone has two receivers so that it is capable to receive signals from two different base stations at the same time. Since this is very expensive it is advantageous to have the possibility to use a mobile telephone that has only one receiver and is still capable to operate as a GSM telephone and is at the same time capable to monitor UMTS base stations.

To obtain the information that is necessary to perform a handover to a UMTS base stations of a mobile telephone has to perform three consecutive steps. These steps are called "initial cell search" since the mobile telephone acquires information of a UMTS radio cell. In the first step, a time slot synchronization of the UMTS time slots is located. In the second step time frame synchronization is obtained, and in the third step a scrambling code is identified.

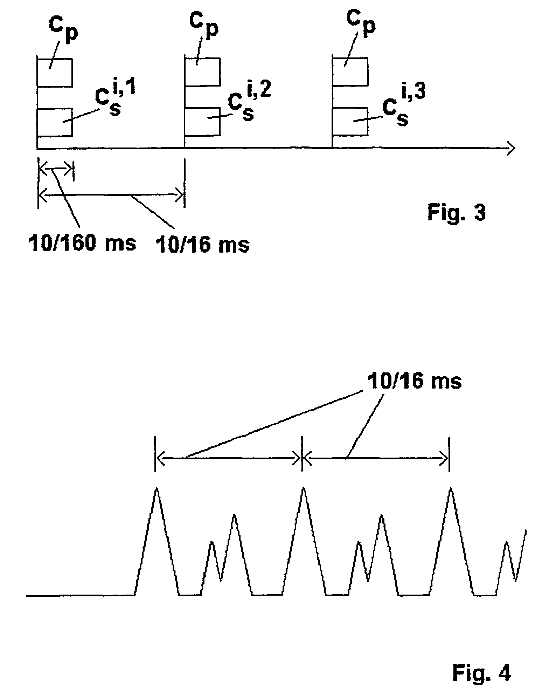

The first two steps are performed with the help of a synchronization channel of the UMTS base station. Such a synchronization channel having a primary synchronization channel and a secondary synchronization channel is shown in Figure 3. The primary synchronization channel is spread by a primary synchronization code cₚ. This primary synchronization code cₚ is the same for every time slot in every base station. As can be seen in Figure 3, the primary synchronization channel is transmitted from the base station at the beginning of each UMTS time slot and has a length of 10/160 ms (0,0625 ms). The secondary synchronization channel is coded with a secondary synchronization code cₛ. This secondary synchronization code cₛ is not the same for every time slot. In the "High" index the first number indicates the time slot specific code and the second number indicates the time slot number as shown in Figure 3 for the first three time slots. Since the secondary synchronization code vary from time slot to time slot within one time frame it is possible to obtain a time frame synchronization by reading this information.

For the first synchronization step the mobile telephone uses a primary synchronization code to identify the strongest base stations within reach. The mobile telephone uses a matched filter matched to the primary synchronization code to obtain the primary synchronization signal of all base stations. The output of such a matched filter is shown in Figure 4. As can be seen, there are signals of different intensity over time. The strongest signal indicates the base stations with the best link quality of all base stations. The strongest signal occurs every 10/16 ms, thereby indicating the beginning of a new UMTS time slot. From this information the mobile telephone acquires time slot synchronization of the strongest base station. With the time slot synchronization the mobile telephone knows when the time frames of the strongest UMTS base stations begin. In principle, it is sufficient to know one of the strongest base stations, but in practice it is useful to know a set of strong base stations. In case that the strongest base station has no capacity for a new mobile telephone, it is then possible to access another strong base station.

In the second step the mobile telephone monitors the signal of the secondary synchronization channel. The mobile telephone has to read the secondary synchronization signal of all time slots of a time frame in order to be capable to identify the different variations of the secondary synchronization code that indicate the different time slots in the time frame. From the sequence of the secondary synchronization codes the time frame synchronization can be derived.

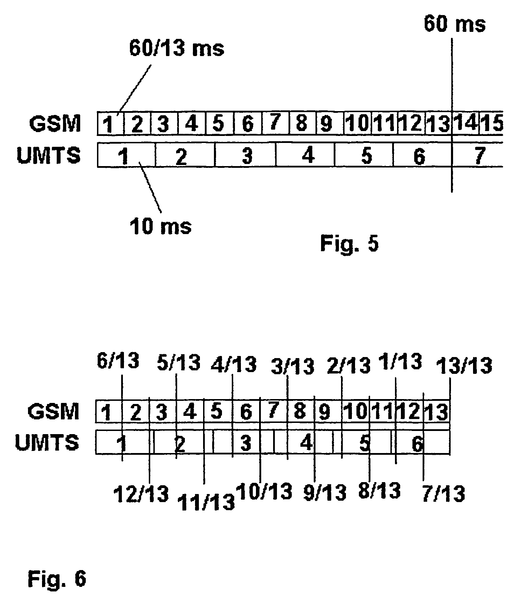

For cell search it is of interest to read the information of a complete UMTS time frame. Since the UMTS time frame has a length of 10 ms, a time period of more than two GSM time frames is needed to read a whole UMTS time frame. Under the assumption that the information in the UMTS time frame does not vary from time frame to time frame, there is another possibility to read the information of a whole time frame. This is illustrated with the help of Figures 5 and 6.

Figure 5 shows the time frame structures of the GSM system and the UMTS system in comparison. 13 consecutive GSM TDMA time frames have a total length of 60 ms. 6 consecutive UMTS time frames have a total length of 60 ms as well. Therefore, it is possible to use in the GSM TDMA time frame structure a monitoring period having the length of 1/13 of one UMTS-FDD time frame in order to reconstruct a UMTS time frame. This method allows reconstructing one UMTS-FDD time frame after performing monitoring for 6 UMTS-FDD time frames. This reconstructed time frame is then not a measurement of a single UMTS-FDD time frame but a reconstructed time frame that combines measurements of different parts of 6 consecutive UMTS-FDD time frames in one reconstructed UMTS-FDD time frame. For using this method it is therefore necessary that the information that is monitored does not change over 6 consecutive UMTS-FDD time frames.

Figure 6 shows again 13 GSM-TDMA time frames and 6 UMTS-FDD time frames. Furthermore, the relative position of the monitoring period is shown. The position is relative, because the position of the time frame borders of the GSM time frame relative to the time frame borders of the UMTS time frames are shown. The end of GSM-TDMA time frame 11 indicates the measurements of the first 13th of a UMTS-FDD time frame. The end of time frame 9 indicates the measurement of the second 13th of a UMTS time frame. The end of GSM time frame 7 indicates the measurements of the third 13th of the UMTS time frame. By using a measurement period in the GSM-TDMA time frame structure that has a fixed position relative to the time frame, it is therefore possible to reconstruct a complete UMTS-FDD time frame out of 6 consecutive UMTS-FDD time frames. This method therefore allows to obtain the information that is needed for a handover from the GSM system to the UMTS system without interrupting the data transfer in the GSM system.

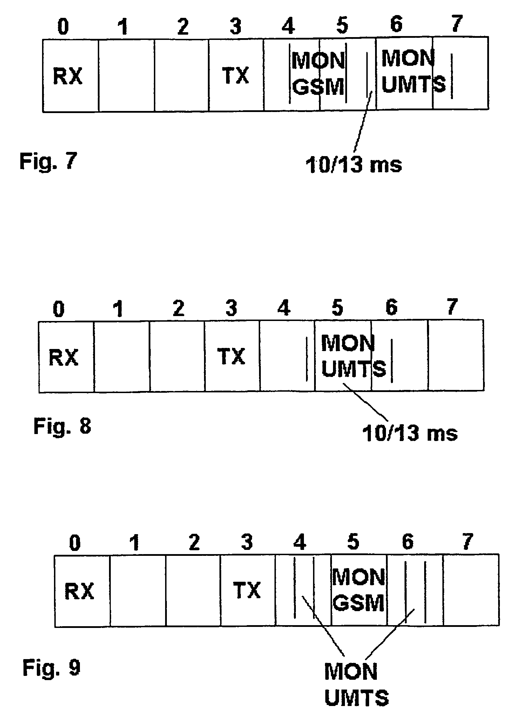

Figure 7 shows how the UMTS monitoring period is located in relation to a GSM-TDMA time frame. Figure 7 shows a GSM-TDMA time frame comprising 8 time slots. The first time slot (number 0) is used for receiving data, and the fourth time slot (number 3) is used for sending data. During the time of the remaining four time slots, a time corresponding to the duration of one time slot is used for monitoring GSM base stations, and a further time period having a length of 10/13 ms (i.e. longer than a GSM-TDMA time slot) is used for monitoring a UMTS station. It is essential that the monitoring period of the UMTS system has a length of at least 10/13 ms; that this monitoring period is repeated during 13 consecutive GSM-TDMA time frames; and that the time difference between the UMTS monitoring period and the beginning or end of the 13 consecutive GSM-TDMA time frames is always the same in each of the thirteen time frames. In this manner, it is possible to reconstruct a complete UMTS-FDD time frame from measurements of 6 different UMTS-FDD time frames, the measurements performed during 13 consecutive GSM-TDMA time frames.

The method is especially useful for a single receiver mobile telephone that has to change the frequency of the reception part of the mobile telephone depending on which signal it has to receive. The mobile telephone must have the capability to change the frequency of the receiver fast enough to allow the receiver to change from receiving data to monitoring a GSM base station and then change again to monitor a UMTS base station. The frequency agility requirement is very high for a receiver having two monitoring periods like in Figure 7, one of a GSM base station and one of a UMTS base station within four consecutive GSM time slots.

Figure 8 shows a further possibility to place a UMTS monitoring period in the GSM-TDMA time frame structure under the assumption that there is no further GSM monitoring period needed during the GSM-TDMA time frame. The GSM-TDMA time frame as shown in Figure 8 has a receiving time slot number 0 and a transmitting time slot number 3. The UMTS monitoring period can be located during the period of 4 GSM time slots. The requirements to the receiver to change the frequency is therefor much more reduced. A drawback of this solution is that the GSM monitoring period has to be skipped for 13 consecutive GSM-TDMA time frames.

Figure 9 shows a further GSM-TDMA time frame in which time slots 0, 3, and 5 are same as shown in Figure 1. Within the GSM-TDMA time slots 4 and 6 are short UMTS monitoring periods that each have a length of 10/160 ms (0,0625 ms) and are separated from each other by 10/16 ms (0,625 ms). With these two monitoring periods it is possible to monitor the secondary synchronization channel if the starting moment of this synchronization channel is known.

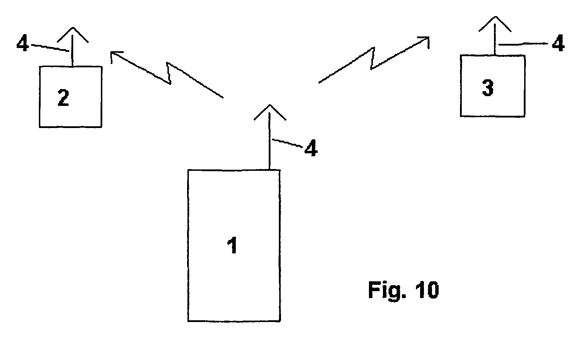

Figure 10 shows a mobile telephone 1 working according to the invention. The mobile telephone 1 is capable to connect to a GSM base station 2 or to a UMTS base station 3. The mobile telephone 1 comprises an antenna 4 used to exchange radio signals (as indicated by the arrows) with the antennas 4 of the base stations 2, 3. The invention relates to a mobile telephone 1 that is already in connection to a GSM base station 2 exchanges radio signals using the GSM-TDMA time frame structure. For performing a handover from the GSM base station 2 to the UMTS base station 3, the mobile telephone 1 must have the possibility to continue a running telephone connection with the GSM base station 2 and at the same time acquire such information from the UMTS base station 3 that is needed for handing the connection from the GSM base station 2 over to the UMTS base station 3. The invention concerns how monitoring periods from monitoring the UMTS base station 3 are fitted into the GSM-TDMA time frame structure.

## Claims

1. A method of monitoring a UMTS-FDD synchronization channel at a mobile telephone (1) when the mobile telephone (1) has an active connection on a GSM-TDMA channel,
**ccomprising the steps of:**
- collecting monitoring results from the UMTS-FDD synchronization channel at predetermined periods during 13 consecutive GSM-TDMA time frames on the GSM-TDMA channel, the collecting totalling at least 10/13 ms per GSM-TDMA time frame, the predetermined positions being fixed in relation to the GSM-TDMA time frame; and
- reconstructing a UMTS-FDD time frame from the monitoring results.

2. A method of claim 1, **wherein:** the said predetermined positions are at such moments when the mobile station (1) neither receives nor transmits for the active connection on the GSM-TDMA channel.

3. A method of claim 1 or 2, **wherein:** the said predetermined positions are at such moments when the mobile station (1) does not monitor a GSM-TDMA channel.

4. A method according to any of the preceding claims, **wherein:** the step of monitoring the said UMTS-FDD synchronization channel is performed using a same receiver that is used for receiving the said GSM-TDMA channel.

5. A mobile telephone (1), **comprising:** means adapted to carry out the method steps of any one of the preceding claims 1 to 4.

## Patentansprüche

1. Verfahren zur Überwachung eines UMTS-FDD-Synchronisationskanals an einem Mobiltelefon (1), wenn das Mobiltelefon (1) eine aktive Verbindung auf einem GSM-TDMA-Kanal unterhält, wobei das Verfahren die folgenden Schritte umfasst:
Erfassen von Ergebnissen der Überwachung von dem UMTS-FDD-Synchronisationskanal in vorgegebenen Zeiträumen während 13 aufeinander folgenden GSM-TDMA-Zeitrahmen auf dem GSM-TDMA-Kanal, wobei die Erfassung sich über insgesamt mindestens 10/13 ms pro GSM-TDMA-Zeitrahmen erstreckt und wobei die vorgegebenen Positionen in Relation zu dem GSM-TDMA-Zeitrahmen festgelegt sind; und
Rekonstruieren eines UMTS-FDD-Zeitrahmens anhand der Ergebnisse der Überwachung.

2. Verfahren gemäß Anspruch 1, wobei: die besagten vorgegebenen Positionen solche Zeitpunkte sind, wenn das Mobiltelefon (1) über die aktive Verbindung auf dem GSM-TDMA-Kanal weder empfängt noch sendet.

3. Verfahren gemäß Anspruch 1 oder 2, wobei: die besagten vorgegebenen Positionen solche Zeitpunkte sind, wenn das Mobiltelefon (1) keinen GSM-TDMA-Kanal überwacht.

4. Verfahren gemäß einem der vorstehenden Ansprüche, wobei: der Schritt des Überwachens des besagten UMTS-FDD-Synchronisationskanals ausgeführt wird, indem derselbe Empfänger genutzt wird, der auch für den Empfang des besagten GSM-TDMA-Kanals genutzt wird.

5. Mobiltelefon (1), das Folgendes umfasst:
ein Mittel, das so beschaffen ist, dass es die verschiedenen Schritte des Verfahrens gemäß einem der vorstehenden Ansprüche 1 bis 4 ausführt.

## Revendications

1. Procédé pour surveiller un canal de synchronisation au niveau d'un téléphone mobile (1) UMTS-FDD lorsque le téléphone mobile (1) a une connexion active sur un canal GSM-TDMA,
**comprenant les étapes :**
- collecter des résultats de surveillance du canal de synchronisation UMTS-FDD à des moments prédéterminés pendant 13 trames temporelles GSM-TDMA successives sur le canal GSM-TDMA, la collecte totalisant au moins 10/13 ms par trame temporelle GSM-TDMA, les positions prédéterminées étant fixes par rapport à la trame temporelle GSM-TDMA, et
- reconstruire une trame temporelle UMTS-FDD à partir des résultats de la surveillance.

2. Procédé selon la revendication 1, **dans lequel** lesdites positions prédéterminées sont à ces moments où le poste mobile (1) ne reçoit ni ne transmet pour sa connexion active sur le canal GSM-TDMA.

3. Procédé selon la revendication 1 ou 2, **dans lequel** lesdites positions prédéterminées sont à ces moments où le poste mobile (1) ne surveille pas un canal GSM-TDMA.

4. Procédé selon l'une quelconque des revendications précédentes, **dans lequel** l'étape de surveillance dudit canal de synchronisation UMTS-FDD est effectuée en utilisant un même récepteur que celui utilisé pour recevoir ledit canal GSM-TDMA.

5. Téléphone mobile (1) **qui comprend** un moyen adapté pour mettre en oeuvre les étapes du procédé selon l'une quelconque des revendications précédentes 1 à 4.
